# EUROPEAN PATENT SPECIFICATION

(11) **EP 1 086 562 B1**
(45) Date of publication and mention of the grant of the patent: **05.10.2005**
(21) Application number: 99927886.4
(22) Date of filing: 04.06.1999
(51) Int. Cl.: H04L 29/06, H04Q 3/00, H04M 7/00

(54) **MULTIPLE SWITCHING CENTRE DATA NETWORK**
MEHRFACHVERMITTLUNGSZENTRALE-DATENNETZ
RESEAU DE DONNEES A PLUSIEURS CENTRES DE COMMUTATION

(30) Priority: 12.06.1998 FI 981365
(43) Date of publication of application: 28.03.2001
(73) Proprietor: TELEFONAKTIEBOLAGET LM ERICSSON (publ), 164 83 Stockholm (SE)
(72) Inventor: MELEN, Björn, FIN-02320 Espoo (FI)
(74) Representative: Kärkkäinen, Veli-Matti
(86) International application number: PCT/EP1999/003892
(87) International publication number: WO 1999/066688

(56) References cited:
- WO-A-98/01978
- WO-A-98/54868
- US-A- 5 717 690

## Description

### Field of the Invention

The present invention relates to multiple switching centre data networks and in particular, though not necessarily, to data networks where access to the Internet from a subscriber terminal may be achieved via a plurality of switching centres.

### Background to the Invention

The conventional way for a home user of a personal computer (PC) to access the Internet is to set up a telephone call, via his telephone operator, to an Internet service provider. The service provider allocates an Internet address to the PC ("subscriber terminal") for the duration of a session and acts as a protocol converter for data transmitted between the Internet and the subscriber terminal.

More recently, it has been proposed to combine the functionality of the Internet service provider into certain exchanges of the telephone network. An advantage of this is that the subscriber need only receive a single bill for both telephone calls and Internet access.

Exchanges provided with this facility are accessed by subscribers dialling a predefined access number. The exchanges contain "intelligence" which enables them to recognise that a call received to this number is an Internet access request. In response, the exchange provides a connection between the subscriber terminal and the Internet via one of a number of so-called Internet Access Servers (IASs)- alternatively known as Network Access Servers (NASs).

The connection between the subscriber terminal and the IAS is a circuit switched connection, i.e. occupying reserved bandwidth, and utilises a Point-to-Point Protocol (PPP) such as is defined in RFC 1661. The reserved bandwidth comprises one Integrated Services Digital Network (ISDN) traffic channel (B-channel) providing a bandwidth of 64Kbits/sec.

The number of IASs provided at an exchange determines the Internet access capacity of the exchange. However, using PPP, the bandwidth which can be accessed by an individual subscriber is limited to 64Kbits/sec (i.e. one ISDN B-channel).

A Multilink PPP (RFC 1990 (1717)(1934)) has been proposed in order to provide further transmission bandwidth to subscriber terminals. This protocol uses a combination of two or more connections to provide a single larger channel. Considering for example the situation where the subscriber line to the exchange makes use of the Integrated Services Digital Network (ISDN) user-network interface, it is possible to make use of both of the communication B-channels available on the subscriber line for Internet access.

This works satisfactorily as long as all of the individual B-channels making up the multilink channel terminate at the same IAS. However, Multilink PPP cannot operate where individual B-channels are provided via different IAS, as the order of data packets sent between the Internet and the subscriber terminal may be lost due to variations in the transmission delays between different B-channels. Also, IP does not provide a mechanism whereby packets having the same IP address can be sent to different IASs. It often transpires that when a low bandwidth access has been provided to a subscriber terminal, and that terminal subsequently requests additional bandwidth, the allocated IAS cannot provide that bandwidth and multilink access cannot therefore be provided.

One possible solution is to reserve always spare capacity on an IAS for a subscriber terminal allocated already a channel on that IAS. However this is wasteful of bandwidth resources. An alternative solution which has been proposed involves connecting several IASs (which are usually provided in the form of printed circuit boards loaded into racks of an exchange) to a common multilane cell bus, such that the connected IASs effectively operate as a single large multiplexer/demultiplexer.

Yet another potential solution involves monitoring the allocation of bandwidth and IASs to subscriber terminals. If a terminal requests additional bandwidth, adding one or more additional B-channels to an existing channel, a controller in the exchange "bundles" the B-channels together and allocates them to the same IAS.

Publication US 5717690 illustrates a method for coordinating and controlling multiple data streams. According to that publication, the Multilink Point-To-Point (PPP) functions only on an area of only one exchange, not in the net. Publication WO 98/01978 shows a method for redirecting traffic on a communication network. The idea is to redirect certain types of messages away from the switch to free up switch resources for other messages.

It will be appreciated that the use of multilink PPP requires that all of the bandwidth (or channels) allocated to a subscriber terminal exists in the same exchange of the telephone network. This presents a potential problem given that proposals exist for diverting an Internet access request from a preferred exchange to an alternative exchange in the event that the preferred exchange is too busy to handle additional bandwidth. It may happen that a first request is diverted to a second exchange whilst a subsequent request, made by calling the same predefined number from the subscriber terminal, is accepted by the primary exchange due to bandwidth at the primary exchange having only recently become available. This results in B-channels being allocated to the subscriber terminal in two different exchanges so that multilink PPP cannot be used.

It is noted that similar problems arise in connecting a subscriber terminal to other types of data networks via multiple exchanges or switching centres, where it is desired to utilise a multilink PPP.

### Summary of the Invention

It is an object of the present invention to overcome or at least mitigate the above noted disadvantages. In particular, it is an object of the present invention to enable the links (or channels) of a multilink communication to be grouped together at a common switching centre, between a terminal and a data network.

According to a first aspect of the present invention there is provided a method of connecting a terminal to a data network, wherein the connection is made through a switching centre having at least one data network access server coupled to the data network, the method comprising:
delivering a first data network access request from said terminal to a first switching centre using an address, predefined at the terminal;
in response to receipt of said first request, determining whether or not the request can be satisfied by the first switching centre;
if the request cannot be satisfied, then transferring the request to a second switching centre where the request can be satisfied; and
returning to said terminal a new address to which subsequent data network access requests should be sent, the new address being an address of the second switching centre.

By returning the address of the second switching centre to the terminal following the establishment of a data network access link or channel at that centre, it is ensured that subsequent access requests are sent to the same centre. This in turn allows multilink PPP to be used for communications between the terminal and the data network.

In a plurality of switching centres, each switching centre preferably comprises a plurality of data network access servers. More preferably, the method comprises allocating the first and subsequent channels of a multilink data network access to the same data network access server of a second switching centre.

In certain embodiments of the invention, the data network is a wide area network such as the Internet, in which case the data network access servers are Internet access servers.

Preferably, the first and second switching centres are exchanges of a telephone network, in which case the terminal may be connected to the exchanges via a telephone line of the telephone network or via a wireless telephone communication channel. More preferably, said predefined and said new addresses are telephone numbers capable of being called by the terminal. In one embodiment, said new address comprises overdecadic characters which prevent the address from being accidentally called from a terminal.

The terminal may be connected to a further data network, e.g. a Local Area Network (LAN), and through that network to the switching centres.

Whilst the terminal may be a subscriber terminal on which is run a user application such as a Web browser, it may also be a computer connected to a LAN or to a WAN (Wide Area Network) and having routing functionality for one or more subscriber terminals connected to the LAN or WAN.

According to a second aspect of the present invention there is provided apparatus for connecting a terminal to a data network, the apparatus comprising first and second switching centres each having at least one data network access server coupled to the data network, the first switching centre having:
receiving means for receiving a first data network access request from the terminal delivered to the first switching centre on the basis of an address, predefined at the terminal;
processing means arranged, in response to receipt of said request, to determine whether or not the request can be satisfied by the first switching centre; and
transfer means arranged, in the event that the request cannot be satisfied, to transfer the request to the second switching centre where the request can be satisfied,
the apparatus further comprising delivery means for returning to the terminal a new address to which subsequent data network access requests should be sent, the new address being an address of the second switching centre.

In one embodiment of the above second aspect of the present invention, the data network is the Internet and said data network access servers are Internet access servers. More preferably, the switching centres are exchanges of a telephone network, and the network comprises a telephone line, or wireless radio telephone link, coupling said terminal to the exchanges.

### Brief Description of the Drawings

For a better understanding of the present invention and in order to show how the same may be carried into effect reference will now be made, by way of example, to the accompanying drawings, in which:
Figure 1 shows schematically the architecture of a public telephone network connecting a subscriber terminal to the Internet;
Figure 2 is a general illustration of the protocol stacks present in an Internet Access Server of the network of Figure 1; and
Figure 3 is a flow chart illustrating the operation of the network of Figure 1.

### Detailed Description of Embodiments

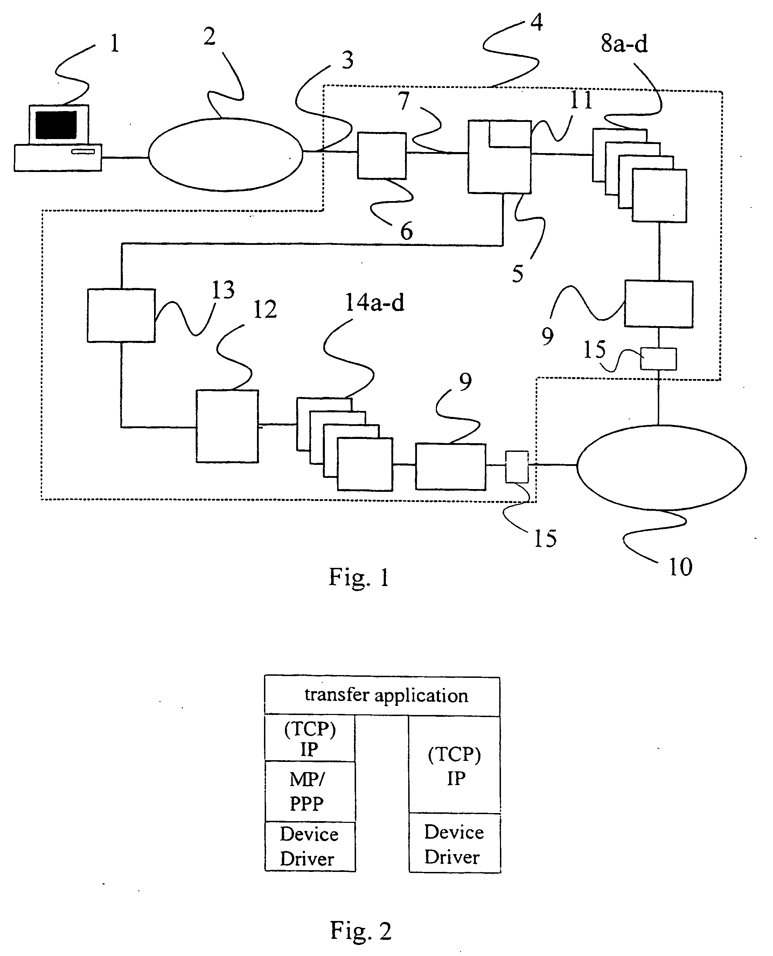

There is illustrated in Figure 1 a personal computer (PC) 1 which is connected to a Local Area Network (LAN) 2. The LAN 2 typically provides a data communication network for intra-office or intra-premises communication. The LAN 2 has a server (not shown in Figure 1) which controls the LAN and connects it to a subscriber line 3 of a public telephone network 4.

A connection may be made between the subscriber line and a switching exchange 5 of the network 4 via a concentrator 6. The concentrator receives many different subscriber lines and multiplexes/demultiplexes signals between those line and a high capacity trunk line 7 connecting the concentrator 6 to the exchange 5. Connections between the concentrator 6 and the exchange 5 may sometimes make use of further, intermediate switching exchanges although these are not shown in Figure 1. For the purpose of the present example, the telephone network 4 is assumed to use the Integrated Services Digital Network (ISDN) user-network interface for communications between the LAN 2 and the exchange 5.

The exchange 5 is coupled to a number (in this case four) of Internet Access Servers (IASs) 8a to 8d which in turn are connected in parallel to a hub 9. The hub 9 acts as a multiplexer/demultiplexer between the IASs 8 and a router 15 via which the telephone network 4 is connected to the Internet 10. Each IAS 8 is provided by a printed circuit board installed in a rack of the exchange 5.

The exchange 5 is connected to each IAS 8 by a line which provides 32 64Kbits/sec channels. A subscriber terminal is allocated one of these channels on request, such that a circuit-switched connection can be established between the subscriber terminal 1 and an IAS 8. Point-to-Point Protocol (PPP) is used to establish (including allocating an IP address to the subscriber terminal) and control the channel between the subscriber terminal 1 and the allocated IAS 8. The protocol stacks present in the IAS 8 are illustrated in Figure 2, where the left hand stack provides for communications with the subscriber terminal 1 whilst the right hand stack provides for communications with the Internet.

The exchange 5 has, or is connected to, a channel allocation controller 11 which may comprise a microprocessor or digital signal processor with associated memory. The controller 11 maintains a record or database of subscriber identities (i.e. subscriber line numbers) for which an active Internet connection currently exists and, for each such identity, the allocated bandwidth (i.e. number of B-channels) and IAS 8. The controller 11 also controls the allocation of IASs and transmission channels to subscriber lines in dependence upon the data stored in its database.

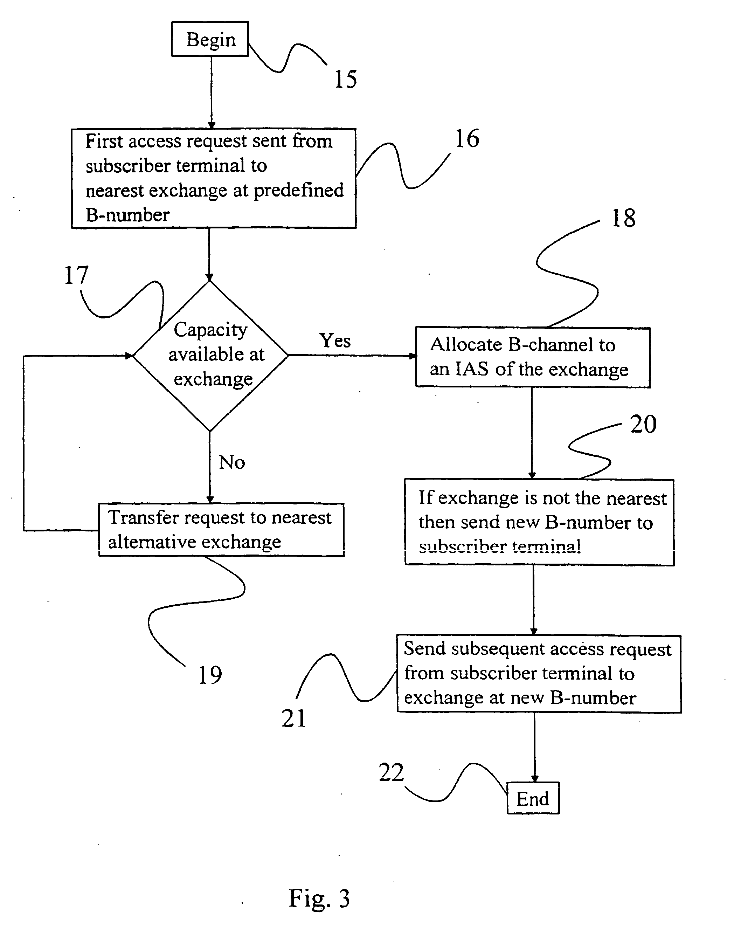

Consider the case where the subscriber terminal 1 requests for the first time (step 15 in Figure 3) a low bandwidth Internet access, via the server in its LAN 2, and using one of the available ISDN B-communication channels. The initial request is made by dialling from the server a predefined telephone number (B-number) which routes the call and the request to a receiver of the exchange 5 (step 16). The exchange recognises the nature of the call and allocates to the subscriber a transmission channel on a certain one of the IASs 8a if capacity is available (steps 17 and 18). The controller 11 then records the telephone number (A-number) of the caller together with the IAS 8a allocated to the subscriber and the transmission bandwidth (i.e. one channel). The subscriber terminal 1 is then able to access the Internet using PPP.

In the event that the subscriber requires additional transmission bandwidth for communicating with the Internet, a new call is made on the second ISDN B-communication channel to the same predefined telephone number (B-number) and the request is passed to the exchange 5. Again the exchange 5 allocates to the subscriber a channel on an IAS 8b where capacity for that channel exists and the controller 11 records this information in its database.

At this point, the controller 11 interrogates its database to determine whether or not an active connection currently exists for the subscriber. In the present example, this interrogation confirms that an active connection does indeed currently exist. The controller then determines whether or not both channels allocated to the subscriber are routed through the same IAS 8 - again, in the case of the present example, the returned result is that the two channels are routed through different IASs 8a and 8b.

As has already been discussed above, in order to make use of multilink PPP, the B-channels making up that link must be routed through the same IAS 8. However, the chosen IAS 8 must have sufficient capacity to cope with the plurality (in this example two) of B-channels making up the multilink. The controller 11 therefore interrogates its database to determine if sufficient spare capacity exists in the IAS 8a. If the answer is yes, then the second channel, currently routed through IAS 8b, is transferred to the IAS 8a. If the answer is no, and sufficient capacity exists for a second channel on the IAS 8b, then the first link is transferred to that IAS 8b. Of course, it may be that sufficient capacity does not exist in either IAS 8a or 8b, in which case the controller 11 determines whether sufficient capacity for two additional channels exists in either IAS 8c or 8d and, if so, transfers both channels to the identified IAS 8c or 8d.

Consider now a situation where the subscriber terminal 1 makes a first request for Internet access by making a call to the exchange 5, but that the controller 11 determines (at step 17) that there is no capacity at the exchange (in any of the IASs 8) for a new B-channel. In this case, the controller 11 instructs the exchange 5 to transfer the request to an alternative exchange 12 which is substantially identical to the first exchange 5 (step 19). The connection between the two exchanges 5,12 is established using so-called Exchange Terminated Circuits 13. A controller of the second exchange 12 (not shown) then determines whether or not its exchange 12 has the capacity to provide the requested access (step 17). If it does have the capacity, then a first B-channel is established, as described above in respect of the first exchange, using the IASs 14a-d of the exchange 12 (step 18).

It is clear from the above discussion that if the subscriber terminal 1 wishes to take advantage of the multilink PPP, then the channels of that link must be provided by the same IAS 8,14. This requires that upon establishment of a first B-channel at the second exchange 12, the second exchange 12 delivers to the subscriber terminal 1 a new access number (B-number), which number identifies the second exchange 12 as the call destination (step 20). This is achieved using the multilink PPP (MP) and the number may be sent via the first exchange 5 or via some alternative route.

At the subscriber terminal 1, the new B-number replaces the predefined B-number for all new access requests that form part of a multilink access (step 21). Of course, following termination of the original link (step 22), the new B-number is erased from the subscriber terminal 1 and future requests are again directed to the first exchange 5 at the original predefined B-number. Many current PPP applications provide for the automatic replacement of IAS (or Internet Service Provider) access telephone number.

It will be appreciated by the skilled person that various modifications may be made to the above described embodiment without departing from the scope of the present invention. For example, whilst the above embodiment has been described with reference to Multilink PPP, any similar protocol may be used which allows two or more distinct channels to be effectively merged into a single higher bandwidth channel, for example Multilink+ PPP. In another modification, the PPP or MP connection is established between the IAS and the server of the LAN 2. The server then routes data to and from the subscriber terminals connected to the LAN.

## Claims

1. A method of connecting a terminal to a data network, wherein the connection is made through a switching centre having at least one data network access server coupled to the data network, **characterized in that** the method is comprising:
delivering a first data network access request from the terminal to a first switching centre using an address, predefined at the terminal;
in response to receipt of said first request, determining in a channel allocation controller of the first switching centre whether or not the first switching centre has the capacity to satisfy the request;
if the request cannot be satisfied, then the channel allocation controller instructs the first switching centre to transfer the request to a second switching centre where the request can be satisfied; and
returning from the second switching centre to the terminal a new address to which subsequent data network access requests should be sent, the new address being an address of the second switching centre.

2. A method according to claim 1 and comprising sending subsequent access requests to the second switching centre at said new address to enable multilink point-to-point protocol communication between the terminal and the data network.

3. A method according to claim 1 or 2, wherein each switching centre comprises a plurality of data network access servers, the method comprising allocating the first and subsequent channels of a multilink data network access to the same data network access server of the second switching centre.

4. A method according to any one of the preceding claims, wherein the data network is the Internet, and the data network access servers are Internet access servers.

5. A method according to any one of the preceding claims, wherein the first and second switching centres are exchanges of a telephone network, the method comprising connecting the terminal to the exchanges via a telephone line of the telephone network or via a wireless telephone communication channel.

6. A method according to claim 5, wherein said predefined and said new addresses are telephone numbers capable of being called by the terminal.

7. Apparatus for connecting a terminal (1) to a data network (10), **characterized in that** the apparatus is comprising first and second switching centres (5,12) each having at least one data network access server (8,14) coupled to the data network (10), the first switching centre (5) having:
receiving means for receiving a first data network access request from the terminal (1) delivered to the first switching centre (5) on the basis of an address, predefined at the terminal (1);
processing means (11) arranged in a channel allocation controller of the first switching centre (5), in response to receipt of said request, to determine whether or not the first switching centre (5) has the capacity to satisfy the request; and
transfer means located in the first switching centre (5) arranged so that, in the event that the request cannot be satisfied, the channel allocation controller instructs the first switching centre (5) to transfer the request to the second switching centre (12) where the request can be satisfied,
the apparatus further comprising delivery means located in the second switching centre (12) for returning to the terminal (1) a new address to which subsequent data network access requests should be sent, the new address being an address of the second switching centre (12).

8. Apparatus according to claim 7, wherein the data network (10) is the Internet and said data network access servers (8,14) are Internet access servers.

9. Apparatus according to claim 7 or 8, wherein the switching centres (5,12) are exchanges of a telephone network (4), and the network (4) comprises a telephone line (3), or wireless radio telephone link, coupling the terminal (1) to the exchanges (5,12).

## Patentansprüche

1. Verfahren zum Verbinden eines Endgerätes mit einem Datennetz, wobei die Verbindung über eine Vermittlungszentrale hergestellt wird, die wenigstens einen Datennetzzugangsserver aufweist, der mit dem Datennetz verbunden ist, **dadurch gekennzeichnet, dass** das Verfahren umfasst:
dass von dem Endgerät zu einer ersten Vermittlungszentrale unter Verwendung einer am Endgerät zuvor festgelegten Adresse eine erste Datennetzzugriffsanforderung übermittelt wird;
dass - in Reaktion auf den Empfang der ersten Anforderung - in einer Kanalzuweisungssteuerung der ersten Vermittlungszentrale bestimmt wird, ob die erste Vermittlungszentrale über die Kapazität verfügt, die Anforderung zu erfüllen, oder nicht;
dass, wenn die Anforderung nicht erfüllt werden kann, die Kanalzuweisungssteuerung die erste Vermittlungszentrale anweist, die Anforderung an eine zweite Vermittlungszentrale zu übermitteln, wo die Anforderung erfüllt werden kann; und
dass von der zweiten Vermittlungszentrale an das Endgerät eine neue Adresse zurückgemeldet wird, an die nachfolgende Datennetzzugriffsanforderungen zu senden sind, wobei die neue Adresse eine Adresse der zweiten Vermittlungszentrale ist.

2. Verfahren nach Anspruch 1, das umfasst, dass nachfolgende Zugriffsanforderungen unter der neuen Adresse an die zweite Vermittlungszentrale gesandt werden, um eine Multilink-Point-to-Point-Protokoll-Kommunikation zwischen dem Endgerät und dem Datennetz zu ermöglichen.

3. Verfahren nach Anspruch 1 oder 2, wobei jede Vermittlungszentrale mehrere Datennetzzugangsserver umfasst, wobei das Verfahren umfasst, den ersten und nachfolgende Kanäle eines Mehrfachanschluss-Datennetzzugriffs demselben Datennetzzugangsserver der zweiten Vermittlungszentrale zuzuweisen.

4. Verfahren nach einem der vorangehenden Ansprüche, wobei das Datennetz das Internet ist und die Datennetzzugangsserver Internetzugangsserver sind.

5. Verfahren nach einem der vorangehenden Ansprüche, wobei die erste und die zweite Vermittlungszentrale Vermittlungen eines Telefonnetzes sind, wobei das Verfahren umfasst, das Endgerät über eine Telefonleitung des Telefonnetzes oder über einen Drahtlostelefonkommunikationskanal mit den Vermittlungen zu verbinden.

6. Verfahren nach Anspruch 5, wobei die zuvor festgelegten und die neuen Adressen Telefonnummern sind, die von dem Endgerät angerufen werden können.

7. Vorrichtung zum Verbinden eines Endgerätes (1) mit einem Datennetz (10), **dadurch gekennzeichnet, dass** die Vorrichtung eine erste und eine zweite Vermittlungszentrale (5, 12) umfasst, von denen jede wenigstens einen Datennetzzugangsserver (8, 14) aufweist, der an das Datennetz (10) gekoppelt ist, wobei die erste Vermittlungszentrale (5) Folgendes aufweist:
ein Empfangsmittel zum Empfangen einer ersten Datennetzzugriffsanforderung von dem Endgerät (1), die auf der Grundlage einer Adresse, die in dem Endgerät (1) zuvor festgelegt wurde, zu der ersten Vermittlungszentrale (5) übermittelt wurde;
ein Verarbeitungsmittel (11), das in einer Kanalzuweisungssteuerung der ersten Vermittlungszentrale (5) angeordnet ist, um in Reaktion auf den Empfang der Anforderung zu bestimmen, ob die erste Vermittlungszentrale (5) über die Kapazität verfügt, die Anforderung zu erfüllen, oder nicht; und
ein in der ersten Vermittlungszentrale (5) befindliches Übertragungsmittel, das so konfiguriert ist, dass die Kanalzuweisungssteuerung in dem Fall, dass die Anforderung nicht erfüllt werden kann, die erste Vermittlungszentrale (5) anweist, die Anforderung an die zweite Vermittlungszentrale (12) zu übermitteln, wo die Anforderung erfüllt werden kann,
wobei die Vorrichtung des Weiteren ein in der zweiten Vermittlungszentrale (12) befindliches Übergabemittel umfasst, um an das Endgerät (1) eine neue Adresse zurückzusenden, an die nachfolgende Datennetzzugriffsanforderungen zu senden sind, wobei die neue Adresse eine Adresse der zweiten Vermittlungszentrale (12) ist.

8. Vorrichtung nach Anspruch 7, wobei das Datennetz (10) das Internet ist und die Datennetzzugangsserver (8, 14) Internetzugangsserver sind.

9. Vorrichtung nach Anspruch 7 oder 8, wobei die Vermittlungszentralen (5, 12) Vermittlungen eines Telefonnetzes (4) sind und das Netz (4) eine Telefonleitung (3) oder eine Drahtlosfunktelefonverbindung umfasst, um das Endgerät (1) mit den Vermittlungen zu verbinden.

## Revendications

1. Procédé de connexion d'un terminal à un réseau de données, dans lequel la connexion est effectuée par l'intermédiaire d'un centre de commutation ayant au moins un serveur d'accès au réseau de données relié au réseau de données, **caractérisé en ce que** le procédé consiste à :
délivrer une première demande d'accès au réseau de données du terminal à un premier centre de commutation en utilisant une adresse prédéfinie dans le terminal ;
en réponse à la réception de ladite première demande, déterminer dans une unité de commande d'allocation de canal du premier centre de commutation si oui ou non le premier centre de commutation a la capacité de satisfaire à la demande ;
si la demande ne peut pas être satisfaite, l'unité de commande d'allocation de canal ordonne alors au premier centre de commutation de transférer la demande à un second centre de commutation dans lequel la demande peut être satisfaite ; et
renvoyer du second centre de commutation au terminal une nouvelle adresse à laquelle doivent être envoyées les demandes suivantes d'accès au réseau de données, la nouvelle adresse étant une adresse du second centre de commutation.

2. Procédé selon la revendication 1, consistant à envoyer des demandes suivantes d'accès au second centre de commutation à ladite nouvelle adresse pour permettre des communications par un protocole point à point par liaisons multiples entre le terminal et le réseau de données.

3. Procédé selon la revendication 1 ou 2, dans lequel chaque centre de commutation comprend une pluralité de serveurs d'accès au réseau de données, le procédé consistant à allouer un premier canal et les canaux suivants d'un accès au réseau de données par liaisons multiples au même serveur d'accès au réseau de données que le second centre de commutation.

4. Procédé selon l'une quelconque des revendications précédentes, dans lequel le réseau de données est l'Internet, et les serveurs d'accès au réseau de données sont des serveurs d'accès Internet.

5. Procédé selon l'une quelconque des revendications précédentes, dans lequel les premier et second centres de commutation sont des autocommutateurs d'un réseau téléphonique, le procédé consistant à connecter le terminal aux autocommutateurs par l'intermédiaire d'une ligne téléphonique du réseau téléphonique ou par l'intermédiaire d'un canal de communication téléphonique sans fil.

6. Procédé selon la revendication 5, dans lequel ladite adresse prédéfinie et ladite nouvelle adresse sont des numéros de téléphone pouvant être appelés par le terminal.

7. Appareil pour connecter un terminal (1) à un réseau de données (10), **caractérisé en ce que** l'appareil comprend des premier et second centres de commutation (5, 12) ayant chacun au moins un serveur d'accès au réseau de données (8, 14) relié au réseau de données (10), le premier centre de commutation (5) comportant :
un moyen de réception pour recevoir une première demande d'accès au réseau de données du terminal (1), délivrée au premier centre de commutation (5) sur la base d'une adresse prédéfinie dans le terminal (1) ;
un moyen de traitement (11) disposé dans une unité de commande d'allocation de canal du premier centre de commutation (5), en réponse à la réception de ladite demande, pour déterminer si oui ou non le premier centre de commutation (5) a la capacité de satisfaire à la demande ; et
un moyen de transfert situé dans le premier centre de commutation (5) et conçu pour que, dans le cas où la demande ne peut pas être satisfaite, l'unité de commande d'allocation de canal ordonne au premier centre de commutation (5) de transférer la demande au second centre de commutation (12) dans lequel la demande peut être satisfaite,
l'appareil comprenant en outre un moyen de fourniture situé dans le second centre de commutation (12) pour renvoyer au terminal (1) une nouvelle adresse à laquelle des demandes suivantes d'accès au réseau de données doivent être envoyées, la nouvelle adresse étant une adresse du second centre de commutation (12).

8. Appareil selon la revendication 7, dans lequel le réseau de données (10) est l'Internet et lesdits serveurs d'accès au réseau de données (8, 14) sont des serveurs d'accès Internet.

9. Appareil selon la revendication 7 ou 8, dans lequel les centres de commutation (5, 12) sont des autocommutateurs d'un réseau téléphonique (4), et le réseau (4) comprend une ligne téléphonique (3) ou une liaison téléphonique radio sans fil, reliant le terminal (1) aux autocommutateurs (5, 12).
